# EUROPÄISCHE PATENTSCHRIFT

(11) **EP 1 976 724 B1**
(45) Veröffentlichungstag und Bekanntmachung des Hinweises auf die Patenterteilung: **19.10.2011**
(21) Anmeldenummer: 07702688.8
(22) Anmeldetag: 11.01.2007
(51) Int. Cl.: B60N 2/20, B60N 2/30

(54) **ABSENKBAR VORGESEHENER FAHRZEUGSITZ MIT KLAPPBAREM LEHNENTEIL UND VERFAHREN**
LOWERABLE VEHICLE SEAT WITH A COLLAPSIBLE BACKREST PART AND ASSOCIATED METHOD
SIÈGE DE VÉHICULE ABAISSABLE POURVU D'UN DOSSIER RABATTABLE ET PROCÉDÉ ASSOCIÉ

(30) Priorität: 11.01.2006 DE 102006001591
(43) Veröffentlichungstag der Anmeldung: 08.10.2008
(73) Patentinhaber: Johnson Controls GmbH, 51399 Burscheid (DE)
(72) Erfinder: SPRENGER, Erik, 42897 Remscheid (DE); HEUEL, Stefan, 57562 Herdorf/Dermbach (DE); YILMAZ, Salih, 50739 Köln (DE)
(74) Vertreter: Schwöbel, Thilo K.
(86) Internationale Anmeldenummer: PCT/EP2007/000204
(87) Internationale Veröffentlichungsnummer: WO 2007/082672

(56) Entgegenhaltungen:
- DE-A1- 3 020 173
- DE-A1- 19 964 143
- DE-B3-102004 014 605

## Beschreibung

Die vorliegende Erfindung betrifft einen Fahrzeugsitz, insbesondere für ein Kraftfahzeug, gemäß dem Oberbegriff des Anspruchs 1. Ein derartiger Fahrzeugsitz ist aus der DE 10 2004 014 605 B3 bekannt.

Fahrzeugsitze müssen heutzutage einen immer größeren Komfort der Kraftfahrzeugbenutzer gewährleisten und hierbei gleichzeitig kompakt und stabil aufgebaut sein, sowie kostengünstig herstellbar sein. Ganz besonders vorteilhaft ist es, wenn ein manuell zu bedienender Fahrzeugsitz mit möglichst geringen Bedienkräften bedienbar ist. Es ist beispielsweise aus der deutschen Offenlegungsschrift DE 101 49 858 A1 bekannt, einen Fahrzeugsitz derart auszugestalten, dass die Rückenlehne nach vorne klappbar ist, wobei gleichzeitig das Sitzteil zur Realisierung eines kompakten Packmaßes abgesenkt wird. Hierdurch ist es dann beispielsweise möglich, eine Durchlademöglickelt für einen Laderaum mit einer vergleichsweise geringeren Ladehöhe zu schaffen. Weiterhin ist es beispielsweise gemäß der Offenlegungsschrift DE 30 20 173 A1 bekannt, einen höhenverstellbaren Fahrzeugsitz mit einer Kompensationsfeder auszustatten, welche das Gewicht eines auf dem Sitz sitzenden Benutzers zumindest teilweise ausgleicht und dadurch die Verstellbarkeit des Sitzes bei darauf sitzendem Benutzer erleichtert. Ferner ist aus der Druckschrift DE 10 2004 014 605 B3 ein Fahrzeugsitz mit einer Bodenstellung eines Sitzrahmens bekannt. Die aus dem Stand der Technik bekannten Fahrzeugsitze erlauben es jedoch nicht, sowohl die einfache und leichte Höheneinstellbarkeit des Fahrzeugsitzes und unabhängig davon eine leichte und einfache Zusammenklappbarkeit bzw. Zusammenfaltbarkeit mit abgesenktem Sitzteil bei großer Bedienerfreundlichkeit bzw. bei kleinen aufzuwendenden Bedienkräften zu ermöglichen.

Es war daher die Aufgabe der vorliegenden Erfindung, einen Fahrzeugsitz, insbesondere für ein Kraftfahrzeug, zur Verfügung zu stellen, der die Nachteile des Standes der Technik nicht aufweist.

Gelöst wird die Aufgabe mit einem Fahrzeugsitz, insbesondere für ein Kraftfahrzeug nach Anspruch 1. Hierdurch ist es möglich, durch eine einfache Bewegung des Lehnenteils eine Steuerung der auf das Sitzteil ausgeübten Kraftwirkung zu ermöglichen. In den Situationen, in welchen die erste Kraftwirkung des Federmittels auf das Sitzteil vorteilhaft ist, etwa dann wenn sich ein Benutzer auf dem Fahrzeugsitz befindet, wird die erste Kraftwirkung ausgeübt und in solchen Situationen, in welchen die erste Kraftwirkung nicht nützlich ist, etwa weil das Sitzteil ohne einen darauf sitzenden Benutzer in die zweite Position abgesenkt werden soll, kann die erste Kraftwirkung verändert, insbesondere verringert oder gänzlich ausgeschaltet werden.

Gemäß einer besonders bevorzugten Ausführungsform der vorliegenden Erfindung ist es vorgesehen, dass die Verstelleinrichtung zur Höhenverstellung und/oder Neigungsverstellung wenigstens einen vorderen Lenker und wenigstens einen hinteren Lenker aufweist, wobei das Federmittel in Abhängigkeit der Einstellung des Lehnenteils zwischen dem vorderen und dem hinteren Lenker zur Aufbringung der ersten Kraftwirkung vorgesehen ist, insbesondere indem ein Drehmoment auf den vorderen und/oder den hinteren Lenker ausübbar ist. Hierdurch ist es erfindungsgemäß in einfacher Weise möglich, durch die Anordnung des Federmittels zu einem sehr vorteilhaften Kraftverlauf derart zu gelangen, dass die durch den Fahrzeugsitz zu realisierende Funktion in optimaler Weise hinsichtlich Komfortaspekten und hinsichtlich einer kostengünstigen Ausführungsform des Fahrzeugsitzes hin optimiert werden kann. Insbesondere ist es möglich, den Anlenkpunkt der Kraftwirkung des Federmittels im Sinne der Größe eines Hebelarms der aufzubringenden Kraft und im Sinne der Winkellage des Angriffspunktes der Kraftwirkung des Federmittels sowohl beim vorderen Lenker als auch beim hinteren Lenker zu optimieren.

Erfindungsgemäß ist es bei einer weiteren Ausführungsform femer bevorzugt, dass das Federmittel derart mit dem vorderen und/oder dem hinteren Lenker verbunden ist, dass auf den hinteren Lenker ein größeres Drehmoment ausübbar ist als auf den vorderen Lenker. Hierdurch ist es in vorteilhafter Weise mit einfachen Mitteln möglich, dass der Sitz einerseits aus jeder Höhenposition heraus von selbst absinkt. falls das Lehnenteil auf das Sitzteil nach vome geklappt ist, und dass femer im Falle einer Einstellung des Lehnenteils in seiner Normalposition gewährleistet ist, dass der Sitz aus jeder Höhenposition heraus von selbst aufsteigt. Hierdurch wird die erste Kraftwirkung in besonders komfortabler Weise durch die Bewegung des Lehnenteils verändert.

Weiterhin ist es gemäß einer bevorzugten Ausführungsform vorgesehen, dass der Fahrzeugsitz eine Steueranordnung derart aufweist, dass die Einstellung des Lehnenteils mit der Ausübung eines Drehmomentes von dem Federmittel auf den hinteren Lenker verbunden ist, wobei die Steueranordnung bevorzugt eine Zugstange und wenigstens einen Betätigungshebel aufweist. Hierdurch ist es erfindungsgemäß in einfacher Weise sowie in - auf die Lebensdauer bezogen - robuster Weise möglich, eine funktlonstaugliche Anordnung bei der Verfügungstellung der Komfortfunktion gemäß der vorliegenden Erfindung zu realisieren.

Gemäß einer weiteren Ausführungsform der vorliegenden Erfindung ist es bevorzugt, dass das Federmittel als Gasteleskopfeder vorgesehen ist. Hierdurch kann eine besonders bauraumkompakte und variable Realisierung der erfindungsgemäßen Federfunktion realisierbar werden.

Erfindungsgemäß ist vorgesehen, dass das Lehnenteil um eine im wesentlichen parallel zu einer ersten Hauptsitzfläche des Sitzteils und im wesentlichen parallel zu einer zweiten Hauptsitzfläche des Lehnenteils verlaufende Schwenkachse schwenkbar mit dem Sitzteil verbunden ist. Hierdurch ist es möglich, durch einfaches Vor- oder Zurückschwenken des Lehnenteils eine Veränderung der ersten Kraftwirkung hervorzurufen.

Ferner ist vorgesehen, dass die erste Kraftwirkung des Federmittels durch eine Schwenkung des Lehnenteils um wenigstens einen vorgegebenen Winkel um die Schwenkachse in Richtung zum Sitzteil aufhebbar ist. Dies hat den Vorteil, dass die erste Kraftwirkung in einem ersten Einstellbereich des Lehnenteils im Wesentlichen voll erhalten bleibt und, dass die erste Kraftwirkung in einem zweiten Schwenkbereich des Lehnenteils relativ zum Sitzteil im Wesentlichen vollständig aufhebbar ist. Der vorgegebene Winkel gibt im wesentlichen die Grenze zwischen diesen beiden Winkelbereichen bzw. Einstellbereichen des Lehnenteils an.

Erfindungsgemäß ist femer bevorzugt, dass mittels des Federmittels eine das Lehnenteil um die Schwenkachse in Richtung zum Sitzteil verschwenkende zweite Kraftwirkung erzeugbar ist. Hierdurch wird vorteilhaft vermieden, dass im Falle einer Entsicherung des Lehnenteils (d.h. die Verrastung des Lehnenteils wird aufgehoben) ein undefinierter Zustand des Lehenteils über einen längeren Zeitraum bestehen bleibt, welcher für den Fall eines Unfalls oder dergleichen zu einer unkontrollierten Bewegung des Lehnenteils führen könnte. Im Gegenteil wird aufgrund der zweiten Kraftwirkung des Federmittels für das Lehnenteil im Wesentlichen immer eine Rastposition angefahren bzw. es nimmt das Lehnenteil immer eine Rastposition ein.

Erfindungsgemäß ist weiterhin bevorzugt, dass ein weiteres Federmittel vorgesehen ist, wobei mittels des weiteren Federmittels eine das Sitzteil von der zweiten Position hin zur ersten Position bewegende dritte Kraftwirkung erzeugbar ist, wobei die dritte Kraftwirkung unabhängig von der Bewegung des Lehnenteils relativ zum Sitzteil vorgesehen ist. Mittels der dritten Kraftwirkung und dem weiteren Federmittel ist es möglich, dass auch bei einem vollständigen Nachvorneklappen der Rückenlehne bzw. des Lehnenteils eine Kompensation beispielsweise des Gewichts des Sitzteils und des Lehnenteils ermöglicht wird. Hierdurch werden die Bedienkräfte bei der Benutzung des erfindungsgemäßen Fahrzeugsitzes weiter reduziert.

Besonders vorteilhaft ist es erfindungsgemäß, wenn das Federmittel und/oder das weitere Federmittel als eine Torsionsfeder vorgesehen ist. Hierdurch ist es beispielsweise möglich, dass die Torsionsfeder im Wesentlichen in Form eines L-förmigen Federmittels realisiert ist, wobei der eine der Schenkel des L-förmigen Bauteils die Torsionsachse darstellt und wobei der weitere Schenkel des L-förmigen Bauteils einen Hebel darstellt, welcher zusammen mit einem variablen oder festen Anschlag die Vorspannung bzw. generell die Spannung des Federmittels bzw. des weiteren Federmittels definiert.

Erfindungsgemäß ist es weiterhin bevorzugt, dass eine Steuerfläche vorgesehen ist, wobei die Steuerfläche direkt oder indirekt am Federmittel angreifend vorgesehen ist. Hierdurch ist es mit einfachen Mitteln möglich, die erste Kraftwirkung und die zweite Kraftwirkung aufgrund einer Bewegung der Steuerfläche, insbesondere über eine Bewegung des Lehnenteils und der daran befestigten Steuerfläche zu realisieren.

Erfindungsgemäß ist es ferner bevorzugt, dass die der zweiten Hauptsitzfläche abgewandte Rückseite des Lehnenteils im Wesentlichen horizontal einstellbar ist. Hierdurch wird es möglich, die Rückseite des Lehnenteils beispielsweise als Tisch zu verwenden. Weiterhin ist es hierdurch möglich, dass die Rückseite des Lehnenteils durch die Absenkung des Sitzteils in die zweite Position derart niedrig angeordnet ist, dass die Rückseite des Lehnenteils als Teil einer Ladefläche bzw. eines Ladebodens des Fahrzeugs benutzbar ist.

Ein weiterer Gegenstand der vorliegenden Erfindung ist ein Verfahren zum Absenken eines erfindungsgemäßen Fahrzeugsitzes, wobei in einem ersten Schritt das Lehnenteil auf das Sitzteil geschwenkt wird und in einem zweiten Schritt das Sitzteil in seine zweite abgesenkte Position eingestellt wird. Hierdurch ist es in einer ersten Benutzungssituation möglich, den höhenverstellbaren Fahrzeugsitz in herkömmlicher Weise zur Höheneinstellung der Sitzposition eines Benutzers zu benutzen, wobei insbesondere das Körpergewicht des Benutzers durch das Federmittel kompensiert wird, so dass die erste Kraftwirkung des Federmittels der Gewichtskraft des Benutzers entgegenwirkt und so zu einer Reduzierung der Bedienkräfte bei der Verstellung des Fahrzeugsitzes führt. In einer weiteren und von der ersten Benutzungssituation unabhängigen zweiten Benutzungsvariante des Fahrzeugsitzes ist es dann aber auch möglich, mit geringem körperlichen Kraftaufwand eines Benutzers die Absenkung des Fahrzeugsitzes und ein Zusammenklappen bzw. eine kompakte Verstauposition des Fahrzeugsitzes zu ermöglichen, bei der die erste Kraftwirkung im Wesentlichen ausgeschaltet ist. Es ist erfindungsgemäß vorteilhaft, wenn die erste Kraftwirkung kurz vor dem Erreichen der vollständig abgesenkten zweiten Position des Sitzteils wieder ansatzweise ausgelöst bzw. eingeschaltet wird, um ein klapperfrei sich verhaltendes Federmittel zu gewährleisten.

Im folgenden wird die Erfindung beispielhaft anhand der Figuren erläutert.
- **Figuren 1 bis 4**: zeigen in Seitenansicht einen erfindungsgemäßen Fahrzeugsitz in einer Mehrzahl von Einstellungen zur Veranschaulichung der unterschiedlichen Benutzungsmöglichkeiten des erfindungsgemäßen Fahrzeugsitzes.
- **Figuren 5 bis 10**: zeigen in Seitenansicht eine weitere Ausführungsform eines erfindungsgemäßen Fahrzeugsitzes in einer Mehrzahl von Einstellungen zur Veranschaulichung der unterschiedlichen Benutzungsmöglichkeiten des erfindungsgemäßen Fahrzeugsitzes.

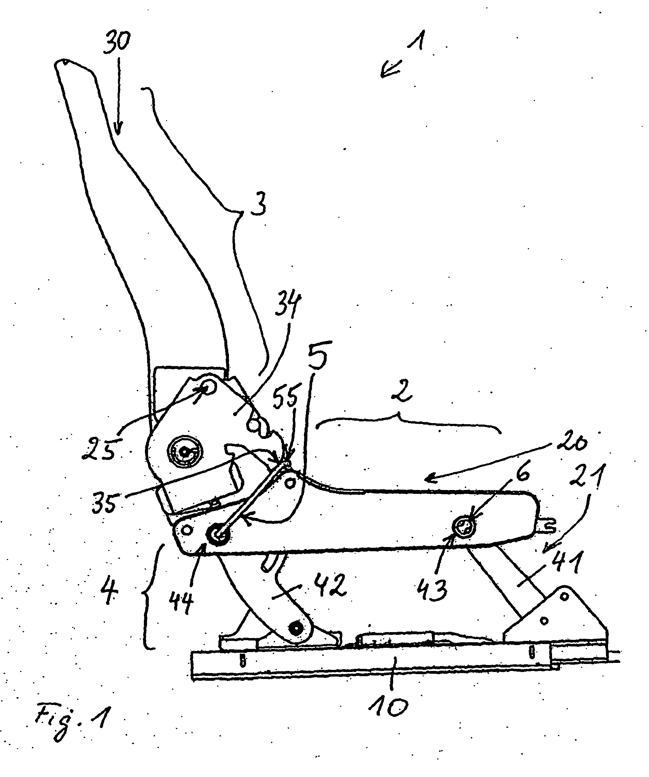

In Figur 1 ist ein Fahrzeugsitz 1, insbesondere für ein Kraftfahrzeug, in Seitenansicht dargestellt. Der Fahrzeugsitz 1 ist insbesondere als ein Fahrzeugsitz für die erste, zweite oder dritte Reihe eines Kraftfahrzeugs vorgesehen, wo es notwendig werden kann, den Fahrzeugsitz zum einem in eine sehr kompakte und abgesenkte Position zu bringen, um beispielsweise eine Verlängerung des Laderaumbodens nach vome hin-zu ermöglichen. Weiterhin kann es erfindungsgemäß auch vorteilhaft vorgesehen, sein, dass der Fahrzeugsitz in zusammengeklappter Position als Tisch Benutzung findet.

Der erfindungsgemäße Fahrzeugsitz 1 weist ein Sitzteil 2 und ein Lehnenteil 3 auf, wobei das Lehnenteil 3 relativ zum Sitzteil 2 beweglich vorgesehen ist. Das Sitzteil 2 weist eine nur schematisch angedeutete erste Hauptsitzfläche 20 auf. Das Lehnenteil 3 weist eine ebenfalls lediglich schematisch dargestellte zweite Hauptsitzfläche 30 auf. Die lediglich schematische Darstellung der Hauptsitzflächen 20, 30 rührt im Wesentlichen davon, dass in den Figuren 1 bis 4 lediglich die Strukturelemente des Fahrzeugsitzes 1 dargestellt sind und die Polsterelemente der Einfachheit halber weggelassen wurden. In der Darstellung gemäß Figur 1 verläuft die erste Hauptsitzfläche 20 im Wesentlichen waagerecht, das heißt parallel zum Sitzteil 2 und senkrecht zur Zeichenebene, während die zweite Hauptsitztläche 30 im Wesentlichen parallel zum Lehnenteil 3 und ebenfalls senkrecht zur Zeichenebene verläuft. Das Lehnenteil 3 ist um eine Schwenkachse 25, welche im Wesentlichen parallel sowohl zur ersten als auch zur zweiten Hauptsitzfläche 20, 30 verläuft, schwenkbar vorgesehen. Das Lehnenteil 3 kann damit durch eine Verschwenkung um die Schwenkachse 25 auf die erste Hauptsitzfläche 20 bzw. auf das Sitzteil 2 verschwenkt werden. Der Fahrzeugsitz 1 weist ferner eine Verstelleinrichtung 4 zur Höhenverstellung und/oder Neigungsverstellung wenigstens des Sitzteils 2 auf. Hierzu ist als Verstelleinrichtung 4 insbesondere eine Mehrzahl von Schwingen bzw. Lenkrn vorgesehen, welche an einem Sitzunterbau 10 bzw. an einer Bodengruppe des nicht dargestellten Kraftfahrzeugs befestigt ist. Beispielsweise weist die Verstelleinrichtung 4 vordere Lenker 41 und hintere Lenker 42 auf, wobei durch eine Drehung der Lenker 41, 42 relativ zum Sitzteil 2 und relativ zum Sitzunterbau 10 des Fahrzeugs eine Höhenverstellung bzw. eine Neigungsverstellung des Sitzteils 2 bzw. des Sitzteils 2 zusammen mit dem Lehnenteil 3 bewirkt wird. Als Verstelleinrichtung 4 kann es insbesondere auch vorgesehen sein, dass lediglich eine Neigungsverstellung des Sitzteils vorgesehen ist, beispielsweise durch lediglich ein einziges Paar von Lenkern. Es ist klar, dass in Figur 1 die vorderen bzw. hinteren Lenker 41, 42 im Wesentlichen paarweise seitlich des Fahrzeugsitzes 1 vorgesehen sind. Es ist jedoch selbstverständlich erfindungsgemäß auch möglich, eine andere Auslegung mit lediglich einem einzige Lenker vome bzw. einem einzigen Lenker hinten oder auch einem einzigen Lenker sowohl vome als auch hinten vorzusehen.

Die Verstelleinrichtung 4 ist mit dem Sitzteil 2 verbunden, beispielsweise über rohrartige Bauteile, mit denen bzw. an denen beispielsweise die Lenker 41, 42 angreifen. Solche rohrartigen Bauteile sind in der Figur 1 mit dem Bezugszeichen 43 für den oder die vorderen Lenker 41 bzw. mit dem Bezugszeichen 44 für den oder' die hinteren Lenker 42 bezeichnet.

Erfindungsgemäß ist ein Federmittel 5 vorgesehen, welches das Sitzteil 2 in,seine angehobene Position (nachfolgend als erste Position bezeichnet) bewegt. Dieses ist erfindungsgemäß beispielsweise mittels einer Torsionsfeder als Federmittel 5 realisierbar, welche eine im Wesentlichen parallel und konzentrisch zum hinteren rohartigen Bauteil 44 aufweisende Torsionsachse aufweist und weiterhin einen Hebel 55 aufweist, durch welchen die Torsionsfeder bzw. das Federmittel 5 gedreht und damit gespannt bzw. entlastet werden kann. Mit dem Lehnenteil 3 ist erfindungsgemäß ein Steuerelement 34 mit einer Steuerfläche 35 verbunden bzw. wirkverbunden, so dass der Hebel 55 des Federmittels 5 durch die Steuerfläche 35 ' des Steuermittels 34 bzw. Steuerelements 34 bewegbar ist und so eine Veränderung der von dem Federmittel 5 hervorgerufenen Kraftwirkung möglich ist.

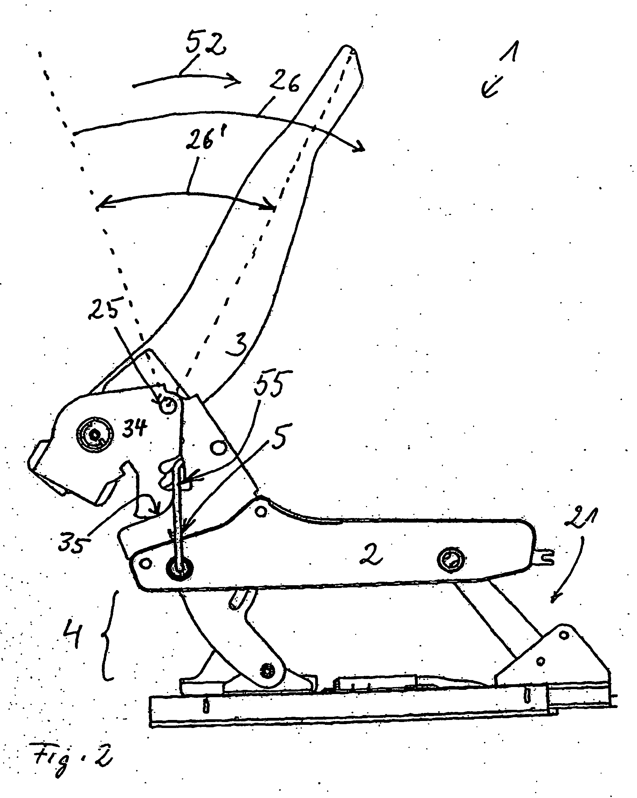

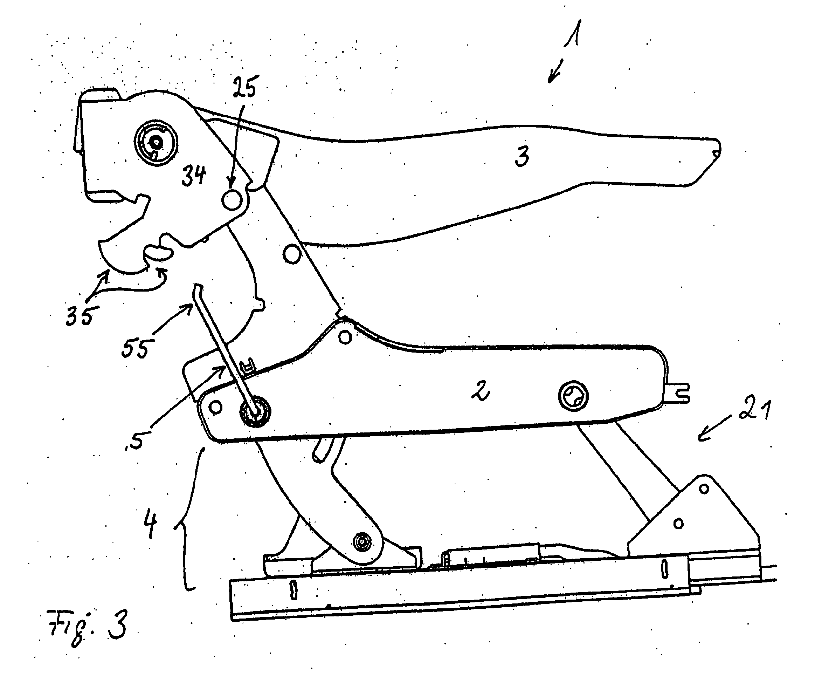

In Figur 2 ist der erfindungsgemäße Fahrzeugsitz 1 in Seitenansicht mit dem Sitzteil . 2, dem Lehnenteil 3, der Schwenkachse 25 dem Steuerelement 34, der Verstelleinrichtung 4 und dem Federmittel 5 dargestellt. In der Darstellung der Figur 2 ist das Lehnenteil 3 im Vergleich zur Position gemäß Figur 1 um einen Winkel 26' in Richtung auf das Sitzteil 2 hin verschwenkt dargestellt. In dieser Einstellung ist ebenfalls das Steuermittel 34 und die Steuerfläche 35 des Steuermittels 34 zusammen mit dem Lehnenteil 3 derart verschwenkt, dass das Federmittel 5 und damit dessen Hebel 55. im Beispiel gegen den Uhrzeigersinn gedreht ist (im Vergleich zur Position in Figur 1), wodurch eine Entlastung des Federmittels 5 hervorgerufen wird. Wird das Lehnenteil 3 noch etwas weiter bis zu einem vorgegebenen Winkel 26 geschwenkt, nimmt das Federmittel 5 seine in Figur 3 dargestellte entspannte Position ein. Der vorgegebene Winkel 26 trennt den ersten Schwenkbereich (Federmittel 5 eingeschaltet) vom zweiten Schwenkbereich (Federmittel 5 ausgeschaltet). Dies bewirkt, dass die erste Kraftwirkung des Federmittels 5, welche die Einstellung des Sitzteils 2 in seiner angehobenen Position bewirkt, vermindert oder ganz aufgehoben ist. Gleichzeitig ist durch einen Vergleich der Figuren 1 und 2 auch erkennbar, dass das Federmittel 5 eine zweite Kraftwirkung 52 auf das Lehnenteil 3 ausübt. Hierdurch ist es möglich, dass das Lehnenteil 3 immer in einer verrasteten und damit definierten Position um die Schwenkachse 25 eingestellt ist, weil die zweite Kraftwirkung 52 das Lehnenteil 3 immer in eine solche " verrastete Position hineintreibt, auch wenn das Lehnenteil 3 einmal (kurzzeitig) in einer undefinierten bzw, unverrasteten Position eingestellt ist. Die zweite Kraftwirkung 52 wird dadurch realisiert, dass durch die Positionierung der Schwenkachse 25, des Berührungspunktes des Federmittels 5 mit der Steuerfläche 35 und der Torsionsachse des beispielhaft als Torsionsfeder ausgelegten Federmittels 5 ein Winkel von mehr als 90° vorliegt, so dass die Spannung des Federmittels 5 die das Lehnenteil 3 nach vome treibende zweite Kraftwirkung 52 hervorruft.

In Figur 3 ist der erfindungsgemäße Fahrzeugsitz 1 in Seitenansicht mit dem Sitzteil 2, dem Lehnenteil 3, der Schwenkachse 25, dem Steuermittel 34, der Steuerfläche 35, dem Federmittel 5 und der Verstelleinrichtung 4 dargestellt, wobei das Lehnenteil 3 im Wesentlichen vollständig nach vorne, das heißt zum Sitzteil 2 hin verschwenkt ist. Hierbei ist der Hebel 55 des Federmittels 5 vollständig freigegeben und es ist das Federmittel 5 im Wesentlichen vollständig in einem entspannten, d.h. nicht vorgespannten, Zustand.

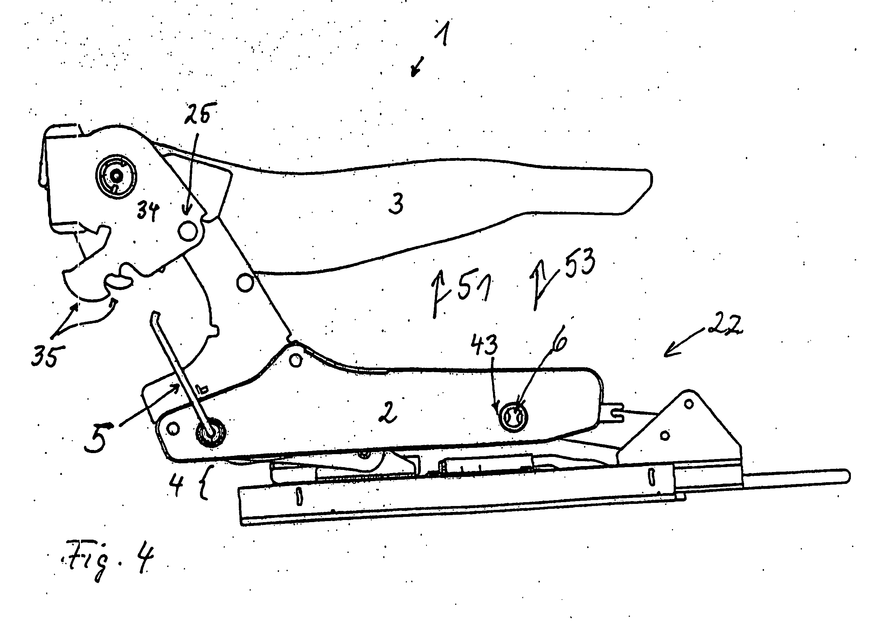

In Figur 4 ist der erfindungsgemäße Fahrzeugsitz 1 mit dem Sitzteil 2, dem Lehnenteil 3, der Schwenkachse 25, dem Steuermittel 34, der Steuerfläche 35, dem Federmittel 5 und der Verstelleinrichtung 4 ebenfalls in Seitendarstellung in einer abgesenkten Position dargestellt. Die abgesenkte Position wird auch als zweite Position 22 bezeichnet, während die in den Figuren 1, 2 und 3 dargestellte Positionen des Sitzteils 2 relativ zum Sitzunterbau 10 als die angehobene erste Position 21 bezeichnet wird. Die erste Kraftwirkung 51 ist in Figur 4 mittels eines Pfeils dargestellt. Mittels der ersten Kraftwirkung 51 treibt das Federmittel 5 das Sitzteil 2 von seiner zweiten abgesenkten Position 22 in seine angehobene Position 21. (Figur 1 bis 3). Hierdurch wird das Körpergewicht eines auf dem Sitz sitzenden Fahrtzeugsbenutzers kompensiert.

Beispielsweise wird die Federwirkung und damit die erste und zweite Kraftwirkung 51, 52 des Federmittels 5 dadurch realisiert, dass das in Figur 1 dargestellte hintere rohrartige Bauteil 44, drehfest mit dem dem Hebel 55 des Federmittels 5 entgegengesetzt vorgesehenen Endes des Federmittels 5 verbunden ist und sich das rohrartige Bauteile 44 zusammen mit den hinteren Lenkern 42 bewegt bzw. dreht. Hierdurch wird beim -Einstellen-der zweiten Position 22 des Sitzteils 2 ausgehend von der ersten Position 21 des Sitzteils 2 ein Drehmoment auf das Federmittel 5 (der Drehmomentvektor ist auf den Betrachter hin orientiert, d.h. aus der Zeichenebene heraus) ausgeübt. Durch die Positionierung der Steuerfläche 35 in der aufrecht eingestellten Sitzposition des Lehnenteils 3 wird somit die erste Kraftwirkung 51 auf das Sitzteil 2 ausgeübt.

Zusätzlich zu dem Federmittel 5 kann es erfindungsgemäß vorgesehen sein, dass ein weiteres Federmittel 6 beispielsweise im vorderen rohrartigen Bauelement 43 angeordnet ist, welches konstant (d.h. nicht durch die Einstellung der Lehnenposition geschaltet) eine zur ersten Kraftwirkung 51 parallele dritte Kraftwirkung 53 auf das Sitzteil 2 ausübt, wie dies in Figur 4 schematisch dargestellt ist.

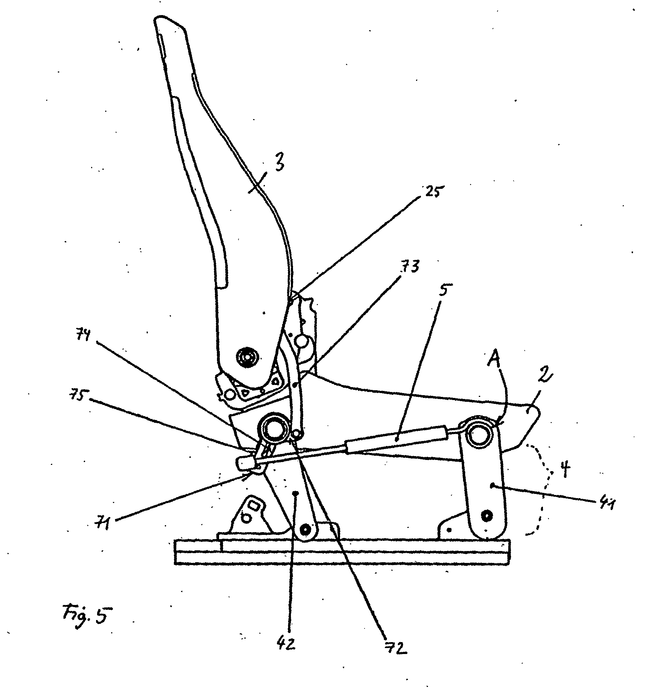

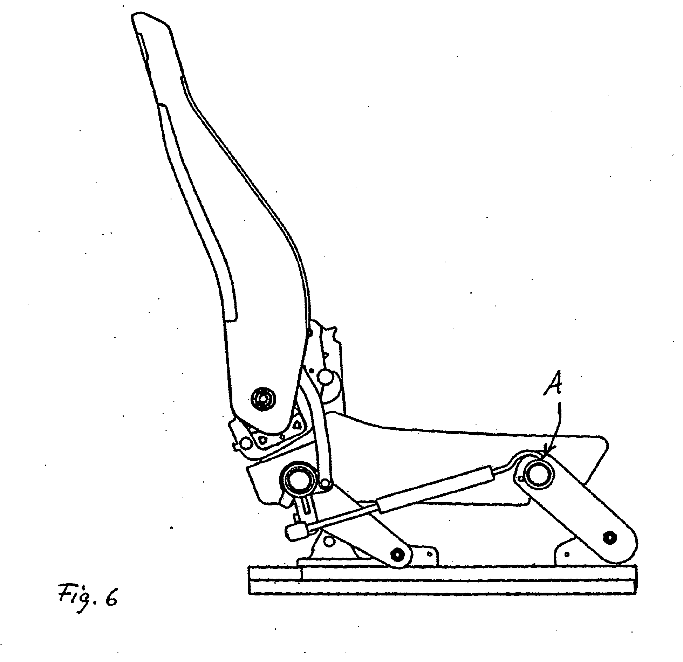

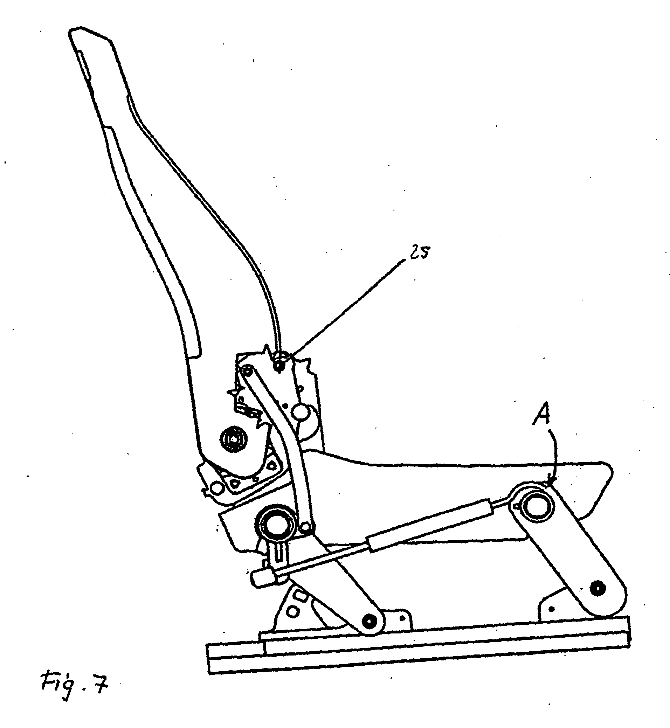

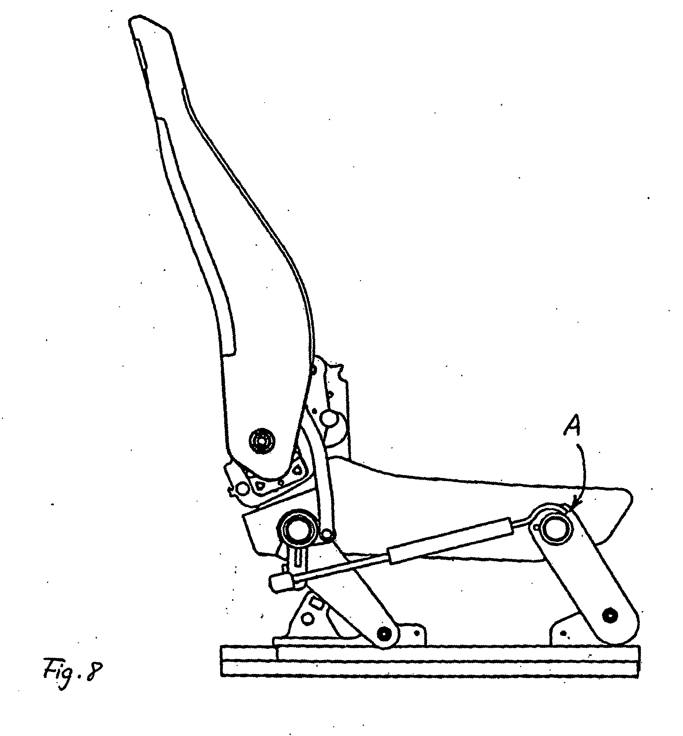

In den Figuren 5 bis 10 ist ein weiteres Ausführungsbeispiel eines erfindungsgemäßen Fahrzeugsitzes 1 jeweils in einer Seitenansicht dargestellt. Bei dem weiteren Ausführungsbeispiel des Fahrzeugsitzes 1 umfasst dieser-wie bei der Ausführungsform gemäß der Figuren 1 bis 4 - ein Sitzteil 2, ein Lehnenteil 3 und eine Verstelleinrichtung 4. Wie gemäß dem Ausführungsbeispiel nach den Figuren 1 bis 4 weist die Verstelleinrichtung 4 eine Mehrzahl von Schwingen bzw. Lenkern auf, wobei der Einfachheit halber in den Figuren 5 bis 10 lediglich der vordere Lenker 41 und der hintere Lenker 42 dargestellt sind. Gemäß der weiteren Ausführungsform ist das Federmittel 5 zwischen dem vorderen Lenker 41 und dem hinteren Lenker 42 der Verstelleinrichtung 4 vorgesehen, wobei ein vorderer Anlenkpunkt des Federmittels 5 an dem vorderen Lenker 41 näher beabstandet zu einem - beispielsweise sitzseitigen - Drehpunkt des vorderen Lenkers 41 angeordnet ist, als der Anlenkpunkt des Federelementes 5 an einem entsprechenden - beispielsweise sitzseitigen - Drehpunkt des hinteren Lenkers 42. Hierdurch ist die Kraftwirkung des Federmittels 5 auf den vorderen Lenker 41 mit einem kleineren Hebel ausgeführt, so dass eine vorgegebene Kraftwirkung des Federmittels zu einem kleineren Drehmoment am vorderen als am hinteren Lenker führt. Der Anlenkpunkt des Federmittels 5 am vorderen Lenker 41 ist mit dem Bezugszeichen A in den Figuren 5 bis 10 bezeichnet. Das Federmittel 5 ist am hinteren Lenker 42 mittels eines ersten Betätigungshebels 71 verbunden, welcher im Wesentlichen frei drehbar gegenüber dem hinteren Lenker 42 vorgesehen ist. Die Drehung des ersten Betätigungshebels 71 gegenüber dem hinteren Lenker 42 wird jedoch in der Drehrichtung im Uhrzeigersinn in der. Darstellung gemäß der Figur 5 durch einen Anschlag 75 bzw. eine Anschlagnase 75 begrenzt, welche mit dem hinteren Hebel 42 verbunden ist. Falls der erste Betätigungshebel 71 derart eingestellt ist, dass ein Anschlag an der Anschlagnase vorliegt, bewirkt die Kraftwirkung aufgrund des Spannungszustandes in dem Federmittel 5, das ein (rechtsdrehendes, d. h. das Sitzteil 2 des Fahrzeugsitzes 1 aufrichtendes) Drehmoment auf den hinteren Lenker 42 ausgeübt wird. Dieser Sachverhalt ist in der in den Figuren 5 bis 8 dargestellten Normalposition des Lehnenteils 3 vorgesehen. Die Figuren 6, 7 und 8 stellen gegenüber der Figur 5 den Fahrzeugsitz 1 in unterschiedlichen Höheneinstellungen des Sitzteils 2 dar. Hierdurch bewirkt das Federmittel 5 jeweils ein Drehmoment auf den vorderen Lenker 41 und den hinteren Lenker 42 derart, dass das Gewicht des Fahrzeugsitzes 1 bzw. das Gewicht jedenfalls des Lehnenteils 3, des Sitzteils 2 und eines Teils der Verstelleinrichtung 4 derart überkompensiert wird, dass bei leerem Fahrzeugsitz dieser in seine höchste Position eingestellt wird, wie sie in der Figur 5 dargestellt ist.

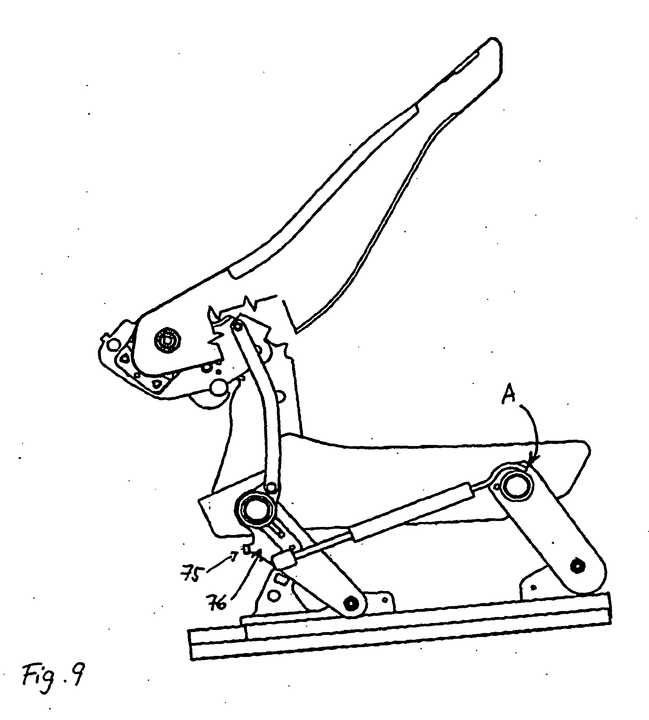

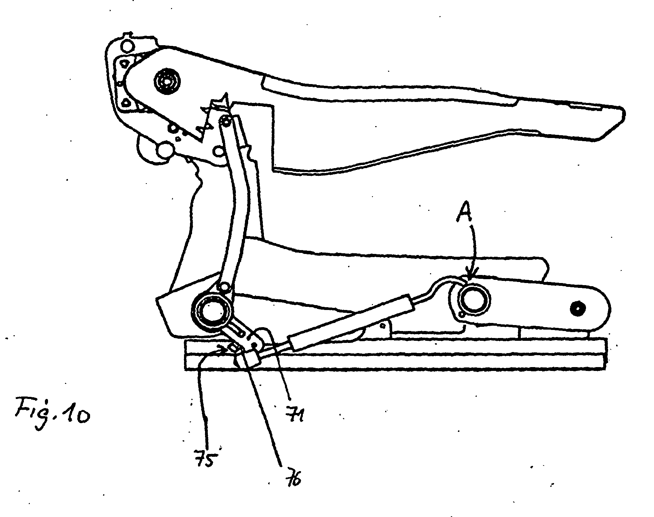

In Figur 5 ist femer angedeutet, dass das Lehnenteil 3 auch um eine Schwenkachse 25, die im Folgenden auch als Drehpunkt der Tischklappfunktlon bezeichnet wird, schwenkbar ist. Hierdurch wird mittels einer Zugstange 73 die Einstellung des ersten Betätigungshebels 71 und eines zweiten Betätigungshebels 72 derart geändert, dass das Federmittel 5 zumindest hinsichtlich des hinteren Lenkers 42 kein Drehmoment mehr auf diesen ausübt, weil der erste Betätigungshebel 71 von dem Anschlag 75 beabstandet eingestellt ist. Dies ist in der Figur 9 schematisch dargestellt Die Figur 9 zeigt in Seitenansicht den erfindungsgemäßen Fahrzeugsitz 1 gemäß dem weiteren Ausführungsbeispiel mit einem teilweise vorgeklappten Lehnenteil 3. Durch die relative Anordnung der Zugstange 73 relativ zur Schwenkachse 25 wird bewirkt, dass der erste Betätigungshebel 71 aufgrund der Bewegung des zweiten Betätigungshebels 72 derart gedreht wird, dass der hintere Angriffspunkt des Federmittels 5 vom Anschlag 75 weg bewegt ist und somit kein Drehmoment mehr auf den hinteren Lenker 42 ausüben kann. Dies ist bei vollständig nach vome geklapptem Lehnenteil 3 für alle Höhen bzw. Neigungseinstellungen des Sitzteils 2 vorgesehen, was in Figur 10 besonders deutlich zu sehen ist durch den mit dem Bezugszeichen 76 versehenen Abstand zwischen dem Anschlag 75 und dem ersten Betätigungshebel 71. Der erste Betätigungshebel 71, der zweite Betätigungshebel 72 und die Zugstange 73 werden als Steueranordnung 7 bezeichnet, welche die Steuerung der Ausübung eines Drehmoments von dem Federmittel 5 auf den hinteren Lenker 42 steuert. Alternativ kann zu der in den Figuren 5 bis 10 dargestellten Ausführungsform auch vorgesehen sein, dass beispielsweise die Zugstange 73 durch ein Zugseil oder dergleichen ersetzt wird. Weiterhin ist es möglich, jedoch nicht in den Figuren dargestellt, dass der erste Betätigungshebel 71, welcher im Folgenden auch als Zwischenhebel bezeichnet wird, und der zweite Betätigungshebel 72 in einem Bauteil ausgeführt werden. Gemäß dem Ausführungsbeispiel gemäß den Figuren 5 bis 10 ist es jedoch vorgesehen, dass die Steueranordnung 7 sowohl den Zwischenhebel 71 als auch den zweiten Betätigungshebel 72 aufweist, wobei ein in der Figur 5 mit dem Bezugszeichen 74 bezeichneter Kontaktbereich zwischen dem Zwischenhebel und dem zweiten Betätigungshebel 72 dazu führt, dass bei einem Zug der Zugstange 73 aus der in der Figur 5 dargestellten Position heraus es zu einer Drehung zunächst des zweiten Betätigungshebels 72 und beim Eingreifen des Kontaktbereichs 74 in den ersten Betätigungshebel 71 auch zu einer Drehung (in Figur 5 in Gegenuhrzeigerrichtung) des ersten Betätigungshebels 71 kommt, welcher den in der Figur 10 bzw. der Figur 9 mit dem Bezugszeichen 76 bezeichneten Abstand des ersten Betätigungshebels zum Anschlag 75 bewirkt.

Erfindungsgemäß ist es besonders bevorzugt bei dem weiteren Ausführungsbeispiel vorgesehen, dass das Federmittel 5 als eine Gasdruckfeder bzw. Gasteleskopfeder 5 realisiert ist. Die Gasfeder bzw. Gasteleskopfeder 5 ist bevorzugt am vorderen Lenker 41, der auch als vorderer Höhenverstellhebei 41 bezeichnet wird, so angelenkt (Bezugszeichen A), dass lediglich ein Teil des Sitzgewichtes angehoben bzw. ausbalanciert wird, so dass der Fahrzeugsitz 1 aus jeder Höhenposition der Verstelleinrichtung 4 heraus von selbst absinkt. Die Anlenkung des Federmittels 5 an dem hinteren Lenker 42 ist hinsichtlich des Hebelarms des Angriffspunktes bezüglich des oberen Drehlagers des hinteren Hebelarms 42 derart vorgesehen, dass aufgrund der Kraftwirkung des Federmittels 5 das ausgeübte Drehmoment dermaßen groß ist, dass der Fahrzeugsitz 1 aus jeder Höhenposition von selbst nach oben gedrückt wird bzw. aufgerichtet wird. Falls aufgrund einer Betätigung der Steueranordnung 7 durch Umklappen der Rückenlehne 3 bzw. des Lehnenteils 3 eine Beabstandung des Angriffspunktes des Federmittels 5 von dem Anschlag 75 (durch Herbeiführung eines Abstandes 76) herbeigeführt wird, kann das Federmittel 5 den Fahrzeugsitz am hinteren Lenker 42 nicht mehr anheben und der Fahrzeugsitz wird (durch den vergleichsweise kleinen Hebelarm des Federmittels 5 am vorderen Lenker 41 (Angriffspunkt A)) in gebremster bzw. gedämpfter Weise nach unten absinken. Wird das Lehnenteil 3 bei vollständig abgesenktem Fahrzeugsitz 1 wieder aufgerichtet, wird die Steueranordnung 7 derart betätigt, dass wieder die in Figur 5 dargestellte Ausgangssituation im Endzustand eingestellt wird, so dass das Federmittel 5 am Anschlag 75 ein Drehmoment auf den hinteren Hebel 42 im Sinne eines Anhebens des Fahrzeugsitzes ausübt.

### Bezugszeichenliste

- 1: Fahrzeugsitz
- 2: Sitzteil
- 3: Lehnenteil
- 4: Verstelleinrichtung
- 5: Federmittel
- 6: weiteres Federmittel
- 7: Steueranordnung
- 10: Sitzunterbau
- 20: erste Hauptsitzfläche
- 21: erste Position
- 22: zweite Position
- 25: Schwenkachse
- 26: vorgegebener Winkel
- 30: zweite Hauptsitzfläche
- 34: Steuermittel
- 35: Steuerfläche
- 41: vorderer Lenker bzw. vordere Lenker
- 42: hinterer Lenker bzw. hintere Lenker
- 43: vorderes rohrartiges Bauelement
- 44: hinteres rohrartiges Bauelement
- 51: erste Kraftwirkung
- 52: zweite Kraftwirkung
- 53: dritte Kraftwirkung
- 55: Hebel des Federmittels
- 71: erster Betätigungshebeungsschenhebei
- 72: zweiter Betätigungshebel
- 73: Zugstange
- 74: Kontaktbereich
- 75: Anschlag/Anschlagnase
- 76: Abstand zwischen dem Anschlag und des ersten Betätigungshebel

## Patentansprüche

1. Fahrzeugsitz (1), insbesondere für ein Kraftfahrzeug, mit einem Sitzteil (2) und einem zum Sitzteil (2) beweglich vorgesehenen Lehnenteil (3) sowie mit einer Versteileinrichtung (4) zur Höhenverstellung und/oder Neigungsverstellung wenigstens des Sitzteils (2), wobei das Sitzteil (2) mittels der Verstelleinrichtung (4) wenigstens in eine angehobene erste Position (21) und in eine abgesenkte zweite Position (22) einstellbar ist, wobei ein Federmittel (5) vorgesehen ist, wobei mittels des Federmittels (5) eine das Sitzteil (2) von der zweiten Position (22) hin zur ersten Position (21) bewegende erste Kraftwirkung (51) erzeugbar ist, wobei, die erste Kraftwirkung (51) durch eine Bewegung des Lehnenteils (3) relativ zum Sitzteil (2) veränderbar vorgesehen ist, und wobei das Lehnenteil (3) um eine im Wesentlichen parallel zu einer ersten Hauptsitzfläche (20) des Sitzteils (2) und im Wesentlichen parallel zu einer zweiten Hauptsitzfläche (30) des Lehnenteils (3) verlaufende Schwenkachse (25) schwenkbar mit dem Sitzteil (2) verbunden ist, **dadurch gekennzeichnet, dass** die erste Kraftwirkung (51) des Federmittels (5) durch eine Schwenkung des Lehnenteils (3) um wenigstens einen vorgegebenen Winkel (26) um die Schwenkachse (25) in Richtung zum Sitzteil (2) aufhebbar ist.

2. Fahrzeugsitz (1) nach Anspruch 1, **dadurch gekennzeichnet, dass** die Verstelleinrichtung (4) zur Höhenverstellung und/oder Neigungsverstellutig wenigstens einen vorderen Lenker (41) und wenigstens einen hinteren Lenker (42) aufweist, wobei das Federmittel (5) In Abhängigkeit der Einstellung des Lehnenteils (3) zwischen dem vorderen und dem hinteren Lenker (41, 42) zur Aufbringung der ersten Kraftwirkung (51) vorgesehen ist, insbesondere indem ein Drehmoment auf den vorderen und/oder den hinteren Lenker (41, 42) ausübbar ist.

3. Fahrzeugsitz (1) nach Anspruch 2, **dadurch gekennzeichnet, dass** das Federmittel (5) derart mit dem vorderen und/oder dem hinteren Lenker (41, 42) verbunden ist, dass auf den hinteren Lenker (42) ein größeres Drehmoment ausübbar ist als auf den vorderen Lenker (41).

4. Fahrzeugsitz (1) nach Anspruch 2 oder 3, **dadurch gekennzeichnet, dass** der Fahrzeugsitz (1) eine Steueranordnung (7) derart aufweist, dass die Einstellung des Lehnenteils (3) mit der Ausübung eines Drehmoments von dem Federmittel (5) auf den hinteren Lenker (42) wirkverbunden ist, wobei die Steueranordnung (7) bevorzugt eine Zugstange (73) und wenigstens einen Betätigungshebel (71) aufweist.

5. Fahrzeugsitz (1) nach einem der Ansprüche 2 bis 4, **dadurch gekennzeichnet, dass** das Federmittel (5) als Gasteleskopfeder vorgesehen ist.

6. Fahrzeugsitz (1) nach einem der vorhergehenden Ansprüche, **dadurch gekennzeichnet, dass** mittels des Federmittels (5) eine das Lehnenteil (3) um die Schwenkachse (25) in Richtung zum Sitzteil (2) verschwenkende zweite Kraftwirkung (52) erzeugbar Ist.

7. Fahrzeugsitz (1) nach einem der vorhergehenden Ansprüche, **dadurch gekennzeichnet, dass** ein weiteres Federmittel (6) vorgesehen ist, wobei mittels des weiteren Federmittels (6) eine das Sitzteil (2) von der zweiten Position (22) hin zur ersten Position (21) bewegende dritte Kraftwirkung (53) erzeugbar ist, wobei die dritte Kraftwirkung (53) unabhängig von der Bewegung des Lehnenteils (3) relativ zum Sitzteil (2) vorgesehen ist.

8. Fahrzeugsitz (1) nach einem der vorhergehenden Ansprüche, **dadurch gekennzeichnet, dass** das Federmittel (5) und/oder das weitere Federmittel (6) als eine Torsionsfeder vorgesehen ist.

9. Fahrzeugsitz (1) nach einem der vorhergehenden Ansprüche, **dadurch gekennzeichnet, dass** eine Steuerfläche (35) vorgesehen ist, wobei die Steuerfläche (35) direkt oder indirekt am Federmittel angreifend vorgesehen ist.

10. Fahrzeugsitz (1) nach einem der vorhergehenden Ansprüche, **dadurch gekennzeichnet, dass** die der zweiten Hauptsitzfläche (30) abgewandte Rückseite (31) des Lehnenteils (3) im Wesentlichen horizontal einstellbar ist.

11. Verfahren zum Absenken eines Fahrzeugsitzes (1) gemäß einem der vorhergehenden Ansprüche, **dadurch gekennzeichnet, dass** in einem ersten Schritt das Lehnenteil (3) auf das Sitzteil (2) geschwenkt wird und dass in einem zweiten Schritt das Sitzteil (2) in seine zweite abgesenkte Position (22) eingestellt wird.

## Claims

1. Vehicle seat (1), in particular for a motor vehicle, having a seat part (2) and having a backrest part (3) which is movable with respect to the seat part (2), and having an adjusting device (4) for height adjustment and/or tilt adjustment at least of the seat part (2), with it being possible for the seat part (2) to be set by means of the adjusting device (4) at least into a raised first position (21) and into a lowered second position (22), with a spring means (5) being provided, with it being possible by way of the spring means (5) to generate a first force action (51) which moves the seat part (2) from the second position (22) toward the first position (21), with it being possible for the first force action (51) to be varied by means of a movement of the backrest part (3) relative to the seat part (2), and with the backrest part (3) being connected to the seat part (2) so as to be pivotable about a pivot axle (25) which runs substantially parallel to a first main seat surface (20) of the seat part (2) and substantially parallel to a second main seat surface (30) of the backrest part (3), **characterized in that** the first force action (51) of the spring means (5) can be removed by pivoting the backrest part (3) about the pivot axle (25) in the direction of the seat part (2) by at least a predefined angle (26).

2. Vehicle seat (1) according to Claim 1, **characterized in that** the adjusting device (4) for height adjustment and/or tilt adjustment has at least one front link (41) and at least one rear link (42), with the spring means (5) being provided between the front and the rear links (41, 42) to impart the first force action (51) as a function of the setting of the backrest part (3), in particular by virtue of it being possible for a torque to be exerted on the front and/or the rear link (41, 42).

3. Vehicle seat (1) according to Claim 2, **characterized in that** the spring means (5) is connected to the front and/or to the rear link (41, 42) in such a way that a greater torque can be exerted on the rear link (42) than on the front link (41).

4. Vehicle seat (1) according to Claim 2 or 3, **characterized in that** the vehicle seat (1) has a control arrangement (7) such that the setting of the backrest part (3) is operatively connected to the exertion of a torque by the spring means (5) on the rear link (42), with the control arrangement (7) preferably having a pull rod (73) and at least one actuating lever (71).

5. Vehicle seat (1) according to one of Claims 2 to 4, **characterized in that** the spring means (5) is provided as a telescopic gas spring.

6. Vehicle seat (1) according to one of the preceding claims, **characterized in that** a second force action (52) which pivots the backrest part (3) about the pivot axle (25) in the direction of the seat part (2) can be generated by way of the spring means (5).

7. Vehicle seat (1) according to one of the preceding claims, **characterized in that** a further spring means (6) is provided, with it being possible by way of the further spring means (6) to generate a third force action (53) which moves the seat part (2) from the second position (22) toward the first position (21), with the third force action (53) being independent of the movement of the backrest part (3) relative to the seat part (2).

8. Vehicle seat (1) according to one of the preceding claims, **characterized in that** the spring means (5) and/or the further spring means (6) is provided as a torsion spring.

9. Vehicle seat (1) according to one of the preceding claims, **characterized in that** a control surface (35) is provided, with the control surface (35) engaging directly or indirectly on the spring means.

10. Vehicle seat (1) according to one of the preceding claims, **characterized in that** the rear side (31), which faces away from the second main seat surface (30), of the backrest part (3) can be set substantially horizontally.

11. Method for lowering a vehicle seat (1) according to one of the preceding claims, **characterized in that**, in a first step, the backrest part (3) is pivoted onto the seat part (2) and **in that**, in a second step, the seat part (2) is set into its second lowered position (22).

## Revendications

1. Siège de véhicule (1), en particulier pour un véhicule automobile, comprenant une partie siège (2) et une partie dossier (3) prévue pour être mobile par rapport à la partie siège (2) et un dispositif de réglage (4) pour le réglage en hauteur et/ou le réglage d'inclinaison au moins de la partie siège (2), la partie siège (2) pouvant être réglée au moyen du dispositif de réglage (4) au moins dans une première position (21) soulevée et dans une seconde position (22) abaissée, un moyen à ressort (5) étant prévu, un premier effet de force (51) déplaçant la partie siège (2) de la seconde position (22) à la première position (21) pouvant être généré à l'aide du moyen à ressort (5), le premier effet de force (51) étant prévu de façon à pouvoir être modifié par un mouvement de la partie dossier (3) par rapport à la partie siège (2), et la partie dossier (3) étant reliée à la partie siège (2) de façon à pouvoir basculer autour d'un axe de pivotement (25) agencé sensiblement parallèlement à une première surface d'assise principale (20) de la partie siège (2) et sensiblement parallèlement à une seconde surface d'assise principale (30) de la partie dossier (3), **caractérisé en ce que** le premier effet de force (51) du moyen à ressort (5) peut être supprimé par un basculement de la partie dossier (3) d'au moins un angle (26) prédéfini autour de l'axe de pivotement (25) en direction de la partie siège (2) .

2. Siège de véhicule (1) selon la revendication 1, **caractérisé en ce que** le dispositif de réglage (4) pour le réglage en hauteur et/ou le réglage d'inclinaison présente au moins un bras oscillant (41) avant et au moins un bras oscillant (42) arrière, le moyen à ressort (5) étant prévu en fonction du réglage de la partie dossier (3) entre le bras oscillant avant et le bras oscillant arrière (41, 42) pour l'application du premier effet de force (51), en particulier du fait qu'un couple peut être exercé sur le bras oscillant avant et/ou le bras oscillant arrière (41, 42).

3. Siège de véhicule (1) selon la revendication 2, **caractérisé en ce que** le moyen à ressort (5) est relié au bras oscillant avant et/ou au bras oscillant arrière (41, 42), **en ce qu'**on peut exercer sur le bras oscillant (42) arrière un couple plus grand que sur le bras oscillant (41) avant.

4. Siège de véhicule (1) selon la revendication 2 ou 3, **caractérisé en ce que** le siège de véhicule (1) présente un dispositif de commande (7) de telle sorte que le réglage de la partie dossier (3) est en liaison active avec l'application d'un couple du moyen à ressort (5) sur le bras oscillant (42) arrière, le dispositif de commande (7) présentant de préférence une crémaillère (73) et au moins un levier d'actionnement (71).

5. Siège de véhicule (1) selon l'une quelconque des revendications 2 à 4, **caractérisé en ce que** le moyen à ressort (5) est prévu comme ressort télescopique à gaz.

6. Siège de véhicule (1) selon l'une quelconque des revendications, **caractérisé en ce qu'**un second effet de force (52) basculant la partie dossier (3) autour de l'axe de pivotement (25) en direction de la partie siège (2) peut être généré à l'aide du moyen à ressort (5).

7. Siège de véhicule (1) selon l'une quelconque des revendications précédentes, **caractérisé en ce qu'**il est prévu un autre moyen à ressort (6), un troisième effet de force (53) déplaçant la partie siège (2) de la seconde position (22) à la première position (21) pouvant être généré au moyen de l'autre moyen à ressort (6), le troisième effet de force (53) étant prévu indépendamment du mouvement de la partie dossier (3) par rapport à la partie siège (2).

8. Siège de véhicule (1) selon l'une quelconque des revendications précédentes, **caractérisé en ce que** le moyen à ressort (5) et/ou l'autre moyen à ressort (6) est conçu comme un ressort de torsion.

9. Siège de véhicule (1) selon l'une quelconque des revendications précédentes, **caractérisé en ce qu'**une surface de commande (35) est prévue, la surface de commande (35) étant prévue en s'appliquant directement ou indirectement sur le moyen à ressort.

10. Siège de véhicule (1) selon l'une quelconque des revendications précédentes, **caractérisé en ce que** la face arrière (31), opposée à la seconde surface d'assise principale (30), de la partie dossier (3) peut être réglée sensiblement horizontalement.

11. Procédé pour abaisser un siège de véhicule (1) selon l'une quelconque des revendications précédentes, **caractérisé en ce que** la partie dossier (3) est basculée sur la partie siège (2), dans une première étape et **en ce que** la partie siège (2) est réglée dans sa seconde position (22) abaissée dans une seconde étape.
